# EUROPÄISCHE PATENTSCHRIFT

(11) **EP 1 287 919 B1**
(45) Veröffentlichungstag und Bekanntmachung des Hinweises auf die Patenterteilung: **16.02.2005**
(21) Anmeldenummer: 02011874.1
(22) Anmeldetag: 28.05.2002
(51) Int. Cl.: B21D 22/14

(54) **Drückmaschine**
Spinning machine
Machine de fluotournage

(30) Priorität: 07.08.2001 DE 10138647
(43) Veröffentlichungstag der Anmeldung: 05.03.2003
(73) Patentinhaber: Leifeld Metal Spinning GmbH, 59229 Ahlen (DE)
(72) Erfinder: Brandkamp, Theodor, 59227 Ahlen (DE)
(74) Vertreter: Wunderlich, Rainer, Dipl.-Ing.

(56) Entgegenhaltungen:
- WO-A-93/09356
- DE-A- 4 209 824
- DE-A- 4 334 611
- US-A- 4 976 126
- PATENT ABSTRACTS OF JAPAN vol. 012, no. 292 (M-729), 10. August 1988 (1988-08-10) -& JP 63 068226 A (NIPPON SPINDLE MFG CO LTD), 28. März 1988 (1988-03-28)

## Beschreibung

Die Erfindung betrifft eine Drückmaschine nach dem Oberbegriff des Anspruchs 1 (siehe z.B. US-A 4 976 126).

Es ist bekannt, bei Drückmaschinen die Umformwerkzeuge, beispielsweise Drückrollen, Umformrollen und Ähnliches, und/oder auch das zu bearbeitende Werkstück an einem verfahrbaren Supportschlitten zu halten. Der Supportschlitten ist üblicherweise entlang eines an der Drückmaschine vorgesehenen Supporträgers längsverfahrbar, um die für das Drücken erforderlichen Relativbewegungen zwischen dem Umformwerkzeug und dem Werkstück realisieren zu können.

Aufgrund der insbesondere beim Drücken entstehenden, vergleichsweise hohen Umformkräfte, muss die Lagerung des Supportschlittens eine ausreichend hohe Steifigkeit aufweisen, damit der Supportschlitten keine unerwünschten Relativbewegungen bezüglich des Supportträgers ausführt. Ferner müssen unerwünschte Schwingungen des Supportschlittens durch die Lagerung wirksam gedämpft werden. Damit die Haupt- und Nebenzeiten beim Einsatz der Drückmaschine gering sind, besteht darüber hinaus an die bekannten Drückmaschinen die Anforderung, dass der Supportschlitten mit möglichst großen Verfahrgeschwindigkeiten verstellbar sein soll. So sind bei den bekannten Drückmaschinen maximale Verfahrgeschwindigkeiten in einem Bereich von 5 bis 7 m/min üblich.

Bei den bekannten Drückmaschinen besteht das Problem, dass bei einer Lagerung des Supportschlittens, die eine ausreichend hohe Steifigkeit besitzt und bei der der Supportschlitten mit hoher Geschwindigkeit verfahren werden kann, die Dämpfungswirkung der Lagerung vergleichsweise gering ist. Im Gegensatz hierzu weisen Lagerungen, bei denen eine ausreichend gute Dämpfungswirkung des Supportschlittens gewährleistet ist, eine vergleichsweise geringere Steifigkeit und eine damit verbundene geringere maximale Verfahrgeschwindigkeit auf.

Es ist **Aufgabe** der Erfindung eine Drückmaschine zu schaffen, mit der eine präzise Bearbeitung bei gleichzeitig vergleichsweise geringen Haupt- und Nebenzeiten möglich ist.

Die Erfindung löst die Aufgabe durch eine Drückmaschine mit den Merkmalen nach Anspruch 1. Vorteilhafte Weiterbildungen der Erfindung ergeben sich aus der nachfolgenden Beschreibung, der Zeichnung sowie den abhängigen Ansprüchen.

Bei der erfindungsgemäßen Drückmaschine wird zum längsverschieblichen Lagern des Supportschlittens entlang des Supportträgers die gleichzeitige Verwendung mindestens einer Wälzlager-Schienenführung, beispielsweise einer Rollen-Schienenführung, gemeinsam mit mindestens einer Gleitführungseinheit vorgeschlagen. Die an sich unübliche Kombination einer Wälzlager-Schienenführung mit einer Gleitführungseinheit führt zu dem überraschenden Ergebnis, dass die Supportanordnung aus Supportträger und daran verschieblich gelagertem Supportschlitten durch diese Art der Lagerung einerseits eine hohe Steifigkeit besitzt und Verfahrgeschwindigkeiten von bis zu 13 m/min ermöglicht, während die Supportanordnung andererseits ein verglichen mit den Supportanordnungen bekannter Drückmaschinen sehr gutes Dämpfungsverhalten zeigt. Hierdurch wird bei der erfindungsgemäßen Drückmaschine ein präzises Arbeiten bei gleichzeitig kurzen Haupt- und Nebenzeiten ermöglicht.

So ergibt sich die hohe Steifigkeit der Supportanordnung bei der erfindungsgemäßen Drückmaschine vor allem dadurch, dass die beim Umformen am Supportschlitten angreifeden Kräfte, insbesondere von der Wälzlager-Schienenführung auf den Supportträger übertragen werden, während die Wälzlagerung der Schienenführung gleichzeitig große Verfahrgeschwindigkeiten ermöglicht. Die Gleitführungseinheit stützt dagegen den Supportschlitten so ab, dass Schwingungen, die beim Anfahren oder Abbremsen des Supportschlittens entstehen oder beim Umformen am Supportschlitten angreifen, wirksam gedämpft werden. Darüber hinaus wird durch die zusätzliche gleitende Führung des Supportschlittens erreicht, dass der Supportschlitten auch bei großen Verfahrgeschwindigkeiten eine sehr genaue Lage bezüglich der Wälzlager-Schienenführung einnimmt, so dass der Supportschlitten bei der erfindungsgemäßen Drückmaschine mit den zuvor angesprochenen hohen Verfahrgeschwindigkeiten von bis zu 13 m/min verfahren werden kann.

Bei einer bevorzugten Ausführungsform der Drückmaschine werden zwei Gleitführungseinheiten zum verschieblichen Lagern des Supportschlittens verwendet, wobei die Gleitführungseinheiten gegeneinander vorgespannt sind und den Supportschlitten in einer definierten Lage bezüglich der Wälzlager-Schienenführung gleitend führen. Insbesondere durch das gegeneinander Vorspannen der beiden Gleitführungseinheiten wird erreicht, dass die am Supportschlitten wirkenden Schwingungen auch bei großen Schwingungsamplituden wirksam gedämpft werden, da die Vorspannkraft zumindest einem Großteil der beim Schwingen am Supportschlitten angreifenden Kräfte entgegenwirkt und diese ausgleicht.

Die Wälzlager-Schienenführung ist vorzugsweise zur Aufnahme einer ersten Kraftkomponente und einer rechtwinklig zu dieser verlaufenden zweiten Kraftkomponente ausgelegt, wobei die beiden Kraftkomponenten quer zur Bewegungsrichtung des Supportschlittens gerichtet sind. Auf diese Weise wird sichergestellt, dass die am Supportschlitten in den Hauptbelastungsrichtungen angreifenden Kräfte, beispielsweise vertikal und horizontal am Supportschlitten angreifende Kräfte, von der Wälzlager-Schienenführung aufgenommen werden, wodurch der Supportschlitten sehr präzise entlang des Supportträgers geführt werden kann. Die Gleitführungseinheit ist bei dieser Ausführungsform bezüglich der Wälzlager-Schienenführung vorspannbar, wobei die von der Gleitführungseinheit erzeugte Vorspannkraft parallel zu einer der beiden Kraftkomponenten verläuft, um den Supportschlitten abzustützen. Dabei ist es insbesondere von Vorteil, wenn die Vorspannkraft parallel zu der Kraftkomponente verläuft, in deren Richtung die größten Schwingungen auftreten, um eine größtmögliche Dämpfungswirkung zu erzielen.

Bei einer bevorzugten Weiterbildung dieser Ausführungsform wird ferner vorgeschlagen, zwei Wälzlager-Schienenführungen vorzusehen, die beiderseits des Supportschlittens in einer gemeinsamen Ebene angeordnet sind. Hierdurch wird erreicht, dass der Supportschlitten zwischen den Wälzlager-Schienenführungen gehalten ist, um den Supportschlitten auch bei hohen am Supportschlitten angreifenden Kräften in einer definierten Lage bezüglich des Supportträgers zu führen. Bei dieser Weiterbildung wirkt die von der Gleitführungseinheit erzeugte Vorspannkraft in einer parallel zur gemeinsamen Ebene der Wälzlager-Schienenführungen verlaufenden Vorspannebene.

Des Weiteren wird bei einer besonders bevorzugten Ausführungsform der Drückmaschine vorgeschlagen, zwei Gleitführungseinheiten vorzusehen, die beiderseits des Supportschlittens angeordnet sind. Durch die beiderseitige Anordnung der Gleitführungseinheiten wird der Supportschlitten zwischen den Gleitführungseinheiten gehalten und geführt, wodurch eine Verlagerung des Supportschlittens in der Ebene in der die beiden Gleitführungseinheiten angeordnet sind, wirksam verhindert ist. Dabei ist zumindest eine der Gleitführungseinheiten unmittelbar zwischen dem Supportschlitten und dem Supportträger angeordnet, um eine möglichst kompakte Anordnung der Supportanordnung an der Drückmaschine zu erreichen.

Damit die Gleitführungseinheit den Supportschlitten oder den Supportträger über einen möglichst langen Verfahrweg führt, weist die Gleitführungseinheit oder zumindest eine der Gleitführungseinheiten eine Führungsleiste auf, die in Bewegungsrichtung des Supportschlittens verläuft, an der der Supportschlitten oder der Supportträger gleitend anliegt.

Zum Erzeugen einer Vorspannkraft am Supportschlitten wird vorgeschlagen, die Gleitführungseinheit in ihrem Abstand zum Supportschlitten und/oder, sofern vorgesehen, auch in ihrem Abstand zu einer zweiten Gleitführungseinheit verstellbar zu gestalten. Hierdurch ist es möglich, die Vorspannkraft einzustellen und auch zu variieren, um beispielsweise Verschleiß auszugleichen.

Bei einer bevorzugten Ausführungsform der erfindungsgemäßen Drückmaschine wird die Verwendung einer Gleitführungseinheit vorgeschlagen, die eine lösbar befestigbare Führungsleiste oder ein lösbar befestigbares Führungselement zum gleitenden Führen des Supportschlittens oder des Supportträgers aufweist. Zum lösbaren Befestigen der Führungsleiste oder des Führungselementes am Supportträger oder am Supportschlitten weist die Gleitführungseinheit ein Befestigungselement sowie mindestens ein zwischen der Führungsleiste oder dem Führungselement und dem Befestigungselement vorgesehenes elastisches Element auf, mit welchem sich die Führungsleiste oder das Führungselement am Befestigungselement abstützt. Bei Verwendung dieser Gleitführungseinheit ist ein Einstellen und Austauschen der Führungsleiste oder des Führungselementes problemlos möglich. Gleichzeitig werden eventuelle Unebenheiten an der Führungsleiste oder am Führungselement sowie an der Fläche, an der der Supportschlitten oder der Supportträger von der Gleitführungseinheit geführt wird, durch das elastische Element ausgeglichen.

Des Weiteren wird vorgeschlagen, die Gleitführungseinheit in die Wälzlager-Schienenführung zu integrieren, wodurch der erforderliche Bauraum für die Gleitführungseinheit verringert werden kann.

Als Wälzlager-Schienenführung wird vorzugsweise eine Schienenführung eingesetzt, die eine Führungsschiene und eine Führungsaufnahme aufweist, welche ihrerseits an der Führungsschiene durch mindestens eine Wälzkörperumlaufeinheit verschieblich gelagert ist. Die so ausgeführte Wälzlager-Schienenführung hat den Vorteil, dass sie einerseits zur Aufnahme hoher Kräfte in der Lage ist, während sie andererseits gleichzeitig hohe Verfahrgeschwindigkeiten zulässt. Bei dieser Ausführungsform der Drückmaschine wird ferner vorgeschlagen, die Gleitführungseinheit in die Führungsaufnahme der Wälzlager-Schienenführung einzusetzen, wobei die Gleitführungseinheit mit ihrer Gleitfläche an einer der Führungsflächen der Führungsschiene unter Vorspannung gleitend anliegt, um die gewünschten Dämpfungseigenschaften zu bewirken.

Bei einer besonders bevorzugten Ausführungsform der Drückmaschine ist der Supportträger als Supportgehäuse ausgeführt, in dem der Supportschlitten verschieblich geführt ist. Bei dieser Weiterbildung werden vorzugsweise zwei Gleitführungseinheiten eingesetzt, die beiderseits des Supportschlittens angeordnet und im Supportgehäuse befestigt sind. Die Gleitführungseinheiten sind dabei gegeneinander vorgespannt, so dass diese mit ihren Gleitflächen am Supportschlitten unter Vorspannung gleitend anliegen und den Supportschlitten in einer definierten Lage bezüglich der Wälzlager-Schienenführung gleitend führen.

Ferner wird bei einer bevorzugten Ausführungsform der Drückmaschine, bei der eine Wälzlager-Schienenführung mit einer Führungsschiene und einer an dieser durch eine Wälzkörper-Umlaufeinheit verschieblich gelagerten Führungsaufnahme verwendet wird, vorgeschlagen, die Führungsschiene am Supportschlitten und die Führungsaufnahme am Supportträger vorzusehen.

Zum Schmieren der Wälzlager-Schienenführung und der Gleitführungseinheit wird insbesondere vorgeschlagen, an der Drückmaschine eine gemeinsame Zentralschmierung vorzusehen, die von Hand oder auch automatisch die Wälzlager-Schienenführung und die Gleitführungseinheit schmiert.

Bei einer besonders bevorzugten Ausführungsform der Drückmaschine ist auch der Supportträger an einem quer zum Supportschlitten verfahrbaren Hauptschlitten befestigt, um Bewegungen des Supportschlittens in einer Ebene zu ermöglichen. Auch hier kann der Hauptschlitten gegebenenfalls durch eine Kombination einer Wälzlager-Schienenführung und einer Gleitführungseinheit längsverschieblich am Gestell der Drückmaschine gelagert sein kann.

Die Supportlagerung der erfindungsgemäßen Drückmaschine ist auch als eigenständige Funktionseinheit zu verstehen, die bei entsprechender Anpassung auch in anderen Werkzeugmaschinen als Drückmaschinen, beispielsweise in Drückwalzmaschinen, eingesetzt werden kann.

Nachfolgend wird die Erfindung anhand zweier Ausführungsbeispiele unter Bezugnahme auf die Zeichnung näher erläutert. Darin zeigen:
- Fig. 1: eine Schnittansicht einer Supportanordnung einer Drückmaschine;
- Fig. 2: eine Schnittansicht quer zur Bewegungsrichtung eines Supportschlittens der Supportanordnung eines ersten Ausführungsbeispiels einer erfindungsgemäßen Drückmaschine;
- Fig. 3: eine vergrößerte Darstellung eines Details der Schnittansicht nach Fig. 3, in der eine Rollen-Schienenführung und eine Gleitführungseinheit der Supportanordnung dargestellt sind;
- Fig. 4: einen vergrößerten Ausschnitt einer Draufsicht auf die Supportanordnung nach dem ersten Ausführungsbeispiel;
- Fig. 5: eine Schnittansicht quer zur Bewegungsrichtung des Supportschlittens der Supportanordnung eines zweiten Ausführungsbeispiels einer erfindungsgemäßen Drückmaschine;
- Fig. 6: eine perspektivische Darstellung einer Rollen-Schienenführung der Supportanordnung mit integrierter Gleitführungseinheit; und
- Fig. 7: eine Schnittansicht der Rollen-Schienenführung nach Fig. 6 quer zur Längsrichtung der Führungsschiene.

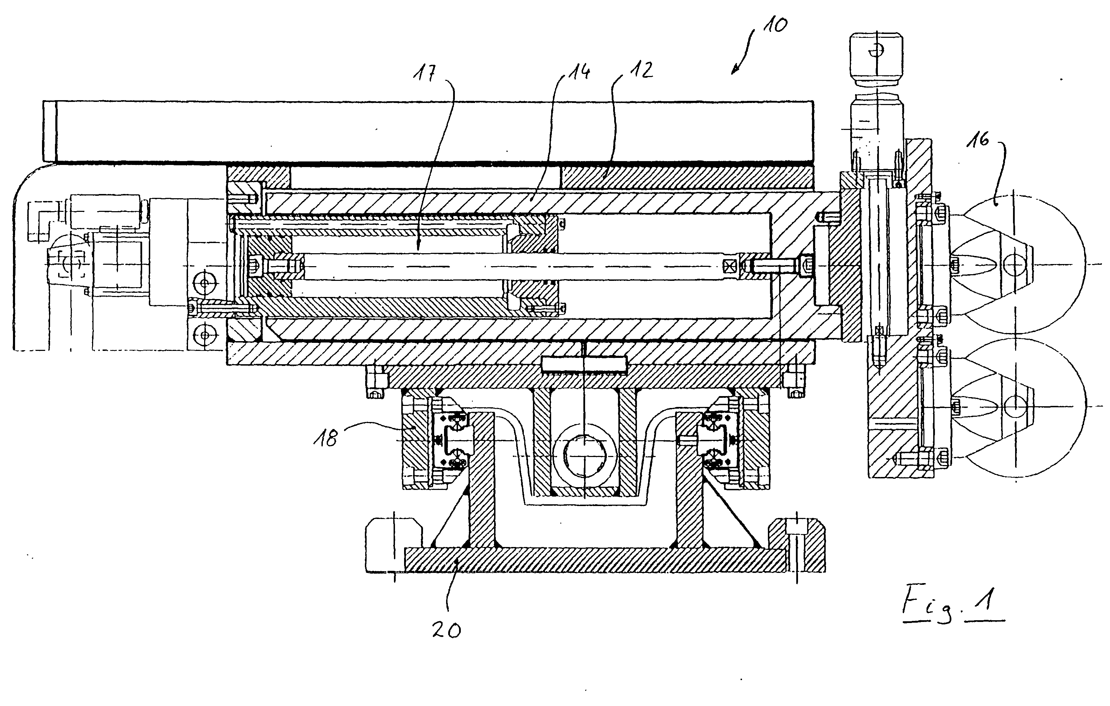

Fig. 1 zeigt in Schnittansicht eine Supportanordnung 10 einer erfindungsgemäßen Drückmaschine (nicht dargestellt). Die Supportanordnung 10 weist ein im Längsschnitt dargestelltes Supportgehäuse 12 auf, in dem ein Supportschlitten 14 längsverschieblich geführt ist. An dem aus dem Supportgehäuse 12 ragenden Ende des Supportschlittens 14 sind zwei Drückrollen 16 in bekannter Weise befestigt, die zum Umformen eines nicht dargestellten Werkstücks eingesetzt werden. Der Supportschlitten 14 ist mit Hilfe eines im Supportschlitten 14 aufgenommenen Hydraulikzylinders 17 bezüglich des Supportgehäuses 12 in eine Bewegungsrichtung R in dessen Längsrichtung verfahrbar, um die Drückrollen 16 gegenüber dem nicht dargestellten Werkstück zu verstellen.

Das Supportgehäuse 12 ist seinerseits mit einem Schlitten 18 verschraubt, der quer zur Bewegungsrichtung R des Supportschlittens 14 entlang eines Trägers 20 verfahrbar ist, welcher am nicht dargestellten Gestell der Drückmaschine befestigt ist.

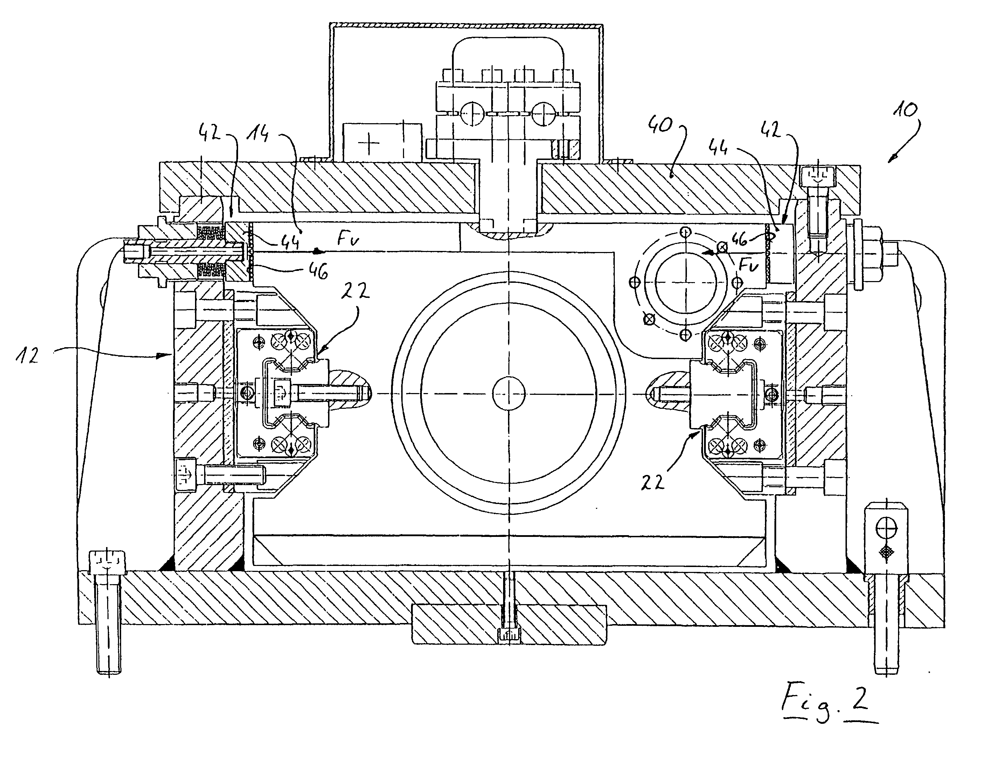

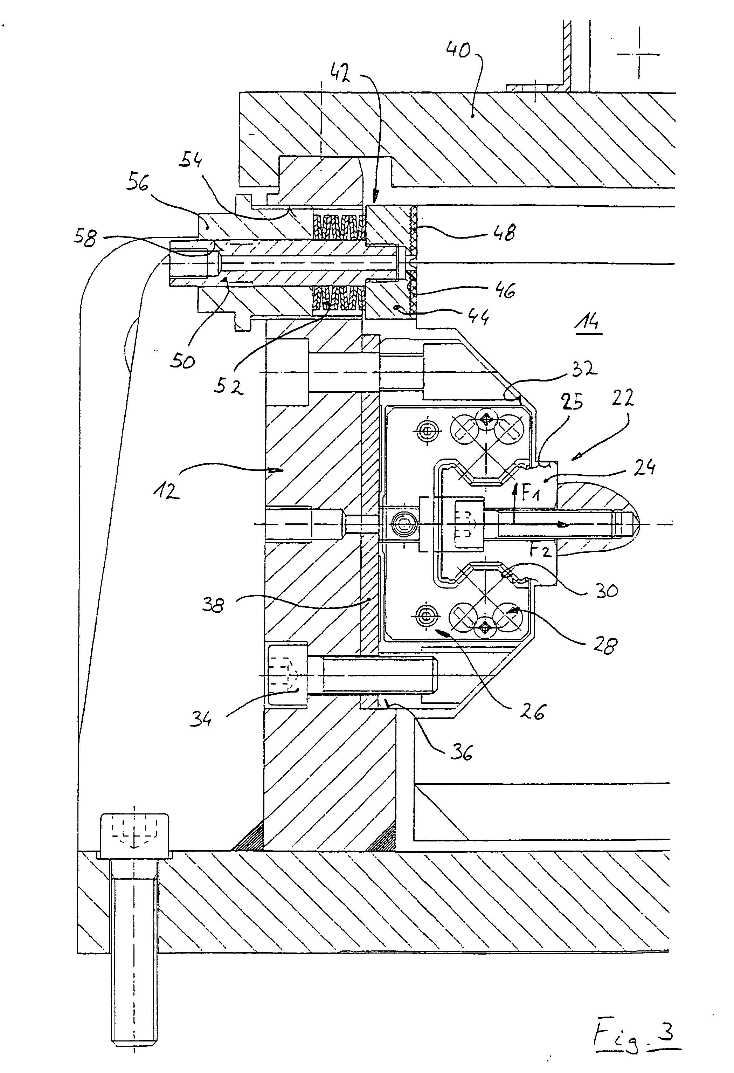

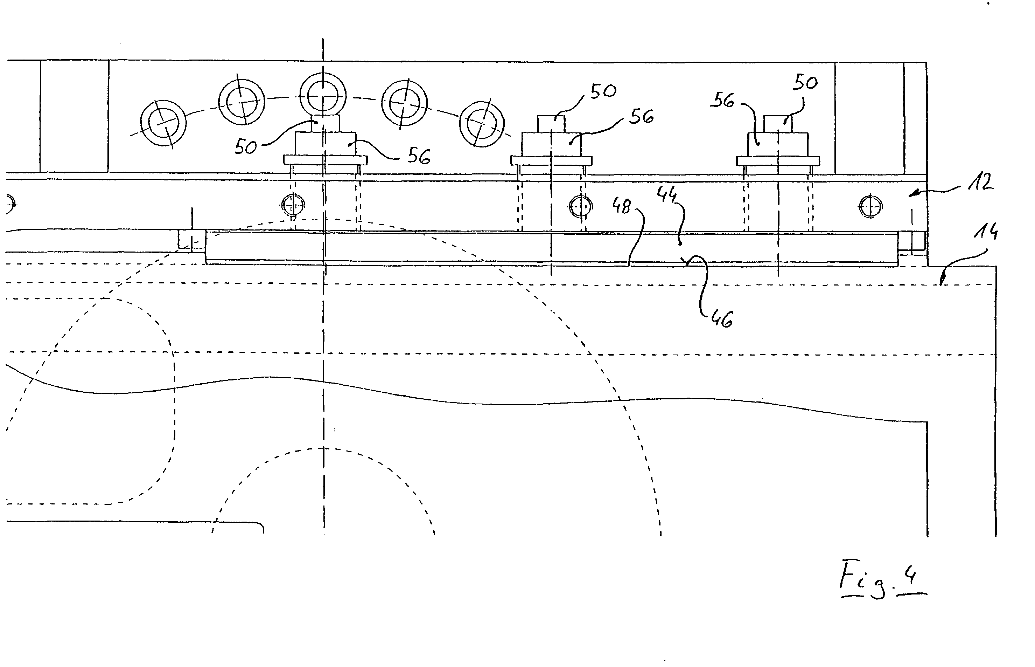

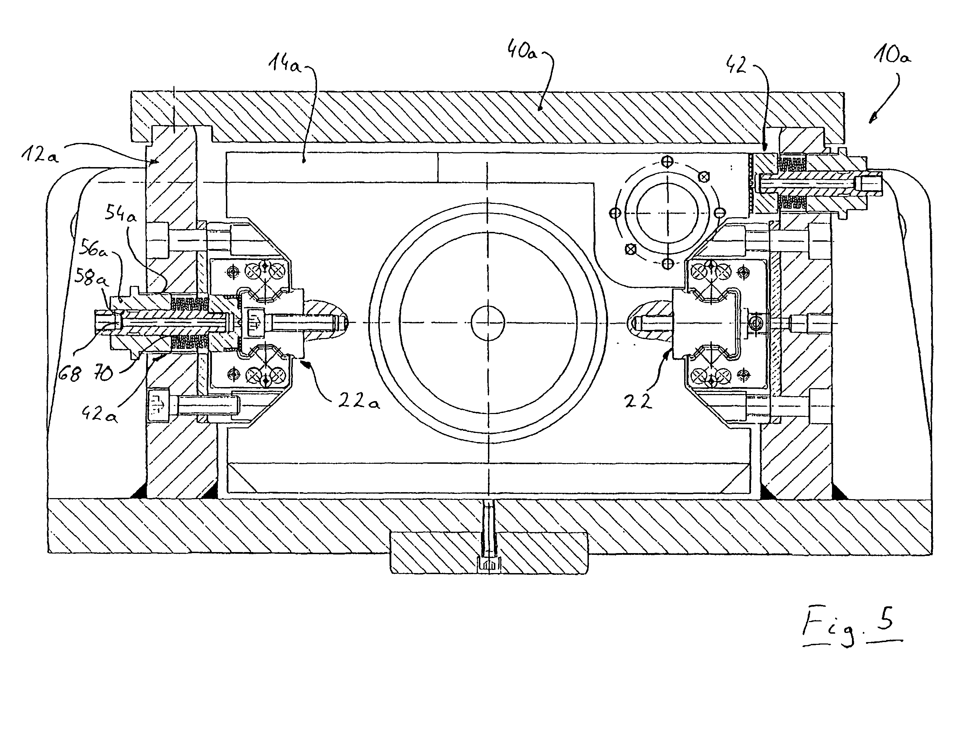

Nachfolgend werden zwei Ausführungsbeispiele zum Lagern des Supportschlittens 14 im Supportgehäuse 12 näher erläutert, wobei in den Fig. 2 bis 4 Details des ersten Ausführungsbeispiels und in den Fig. 5 bis 7 Details des zweite Ausführungsbeispiels dargestellt sind. Die nachfolgend beschriebenen Ausführungsbeispiele können wahlweise bei der in Fig. 1 gezeigten Konstruktion als Supportanordnung eingesetzt werden.

Fig. 2 zeigt eine Schnittansicht quer zur Bewegungsrichtung R des Supportschlittens 14. Der Supportschlitten 14 ist durch zwei beiderseits des Supportschlittens 14 angeordnete Rollen-Schienenführungen 22 geführt, welche in Längsrichtung des Supportgehäuses 12 verlaufen.

Wie Fig. 3 zeigt, in der in einem vergrößerten Ausschnitt die in Fig. 2 links dargestellte Rollen-Schienenführung 22 zu sehen ist, weist jede Rollen-Schienenführung 22 eine Führungsschiene 24 auf, die in einer an der betreffenden Seitenfläche des Supportschlittens 14 ausgebildeten Aufnahmenut 25 eingesetzt und durch Schrauben am Supportschlitten 14 befestigt ist.

An jeder Führungsschiene 24 ist jeweils eine Führungsaufnahme 26 durch zwei Rollenumlaufeinheiten 28 verschieblich gelagert. Die Führungsschiene 24 weist eine Uhrglas-förmige Querschnittsform auf, so dass insgesamt vier Stützflächen 30 gebildet sind, wobei jeweils zwei Stützflächen 30 rechtwinklig zueinander verlaufend zum Abstützen jeweils einer Rollenumlaufeinheit 28 dienen. Auf diese Weise kann jede Rollen-Schienenführung 22 in vier Hauptbelastungsrichtungen Kräfte aufnehmen, so dass eine vertikale Kraftkomponente F1 und gleichzeitig eine horizontale Kraftkomponente F2 von den Rollen-Schienenführungen 22 aufgenommen werden können.

An jeder Seitenfläche des Supportschlittens 14, an der eine der beiden Führungsschienen 24 befestigt ist, ist ferner eine Aufnahme 32 vorgesehen, in der sich die Führungsaufnahme 26 bei ihrer Bewegung entlang der Führungsschiene 24 bewegt.

Jede Führungsaufnahme 26 ist durch mehrere beiderseits der Rollenumlaufeinheiten 28 angeordnete Befestigungsschrauben 34 an der Innenseite des Supportgehäuses 12 befestigt. Dabei stützt sich die jeweilige Führungsaufnahme 26 an einem im Supportgehäuse 12 ausgebildeten Absatz 36 ab, während sie mit ihrer Rückseite an einer zwischen dem Supportgehäuse 12 und der Rückseite angeordneten Halteplatte 38 unter Vorspannung anliegt.

Nahe dem Deckel 40 des Supportgehäuses 12, der die Oberseite des Suppportgehäuses 12 verschließt, ist an jeder Seitenfläche des Supportschlittens 14 oberhalb jeder Rollenschienenführung 22 jeweils eine Gleitführungseinheit 42 angeordnet, deren Aufbau nachfolgend näher erläutert wird.

Wie Fig. 2 zeigt, ist unmittelbar unterhalb des Deckels 40 des Supportgehäuses 12 zwischen dem Deckel 40 und jeder Rollen-Schienenführung 22 jeweils eine der Gleitführungseinheiten 42 an der Innenwand des Supportgehäuses 12 befestigt. Wie Fig. 4 zeigt, in der ein vergrößerter Ausschnitt des Supportgehäuses 12 in Draufsicht gezeigt ist, wobei der Deckel 40 entfernt wurde, weist jede Gleitführungseinheit 42 eine Führungsleiste 44 auf, die sich in Bewegungsrichtung R des Supportschlittens 14 erstreckt. Die beiden Gleitführungseinheiten 42 sind in einer gemeinsamen Ebene angeordnet, die quer zur Bewegungsrichtung des Supportschlittens 14 verläuft und parallel zu der gemeinsamen Ebene angeordnet ist, in der die beiden Rollen-Schienenführungen 22 angeordnet sind. Die Gleitführungseinheiten 42 liegen jeweils mit ihren Führungsleisten 44 an einander entgegengesetzten Anlageflächen 46 beiderseits des Supportschlittens 14 an diesem an.

Um den Reibungskoeffizient zwischen der jeweiligen Anlagefläche 46 und der dieser zugeordneten Führungsleiste 44 möglichst gering zu halten, ist die Führungsleiste 44 zusätzlich mit einer Gleitfläche 46 versehen, die sich über die gesamte Länge der Führungsleiste 44 erstreckt und aus einem besonders gleitfähigen und verschleißfesten Material, beispielsweise Bronze, gebildet ist.

Wie die Fig. 3 und 4 zeigen, sind die Führungsleisten 44 lösbar am Supportgehäuse 12 befestigt. In Fig. 3 ist eine der insgesamt drei Befestigungsstellen, durch die jede der beiden Gleitführungseinheiten 42 am Supportgehäuse 12 lösbar befestigt ist, im Schnitt dargestellt. Zum Befestigen ist in die Führungsleiste 44 der jeweiligen Gleitführungseinheit 42 ein Haltezapfen 50 eingeschraubt. Auf den Haltezapfen 50 ist ein Tellerfederpaket 52 aufgeschoben. Der Haltezapfen 50 ragt durch ein am Supportgehäuse 12 ausgebildetes Durchgangsgewinde 54. In das Durchgangsgewinde 54 ist eine Spannschraube 56 eingeschraubt, die mit einer konzentrischen Durchgangsbohrung 58 versehen ist. Durch die Durchgangsbohrung 58 ragt der Haltezapfen 50, wodurch dieser in einen definierten Lage bezüglich des Durchgangsgewindes 54 und damit bezüglich des Supportgehäuses 12 gehalten ist.

In montiertem Zustand liegt die Führungsleiste 44 an der Anlagefläche 46 des Supportschlittens 40 an. Gleichzeitig wird die Führungsleiste 44, die sich durch das Tellerfedernpaket 52 an der Stirnseite der Spannschraube 56 ababstützt, von der Spannschraube 56 vorgespannt, sobald diese in das Durchgangsgewinde 54 eingeschraubt ist.

Des Weiteren ist für die Rollen-Schienenführungen 22 und die Gleitführungseinheiten 42 eine gemeinsame Zentralschmierung vorgesehen, mit deren Hilfe Schmierstoffe zu den Rollenumlaufeinheiten 28 und durch die Haltezapfen 50 zu den Führungsleisten 44 zugeführt werden.

Durch Einstellen eines definierten Drehmomentes beim Einschrauben der Spannschraube 56 kann eine wohldosierte definierte Vorspannkraft Fv an der Führungsleiste 44 eingestellt werden, so dass der Supportschlitten 14 unter Vorspannung zwischen den beiden Gleitführungseinheiten 42 gehalten ist. Die Vorspannkraft Fv, die in einer parallel zur gemeinsamen Ebene der beiden Rollen-Schienenführungen 22 verlaufenden Ebene wirkt, ist dabei so eingestellt, dass der Supportschlitten 14 von den Führungsleisten 44 der Gleitführungseinheiten 42 definiert zwischen den beiden Rollen-Schienenführungen 22 gehalten ist.

Durch diese kombinierte Anordnung der Rollen-Schienenführungen 22 und der beiden Gleitführungseinheiten 42 wird erreicht, dass die am Supportschlitten 14 angreifenden Kräfte, die beispielsweise beim Umformen entstehen, von den Rollenumlaufeinheiten 28 der Rollen-Schienenführungen 22 aufgenommen werden. So bewirken die Rollen-Schienenführungen 22 eine sehr hohe Steifigkeit der Supportanordnung 10 mit einer gleichzeitig sehr hohen Führungsgenauigkeit des Supportschlittes 14 im Supportgehäuse 12 und damit bezüglich des zu bearbeitenden Werkstücks. Die Gleitführungseinheiten 42 halten den Supportschlitten 14 in einer definierten Lage bezüglich der Rollen-Schienenführungen 22, so dass bei Schwingungen, die am Supportschlitten 14 angreifen, diese Schwingungen von den Gleitführungseinheiten 42 aufgenommen und insbesondere durch die Vorspannkraft Fv äußerst wirksam gedämpft werden, ohne dass die Schwingungen von den Rollen-Schienenführungen 22 aufgenommen und gedämpft werden müssen. Dabei wird die Dämpfungswirkung zusätzlich durch die Schmierstoffe bzw. die Schmierfilme zwischen den Führungseinheiten 44 und dem Supportschlitten 14 sowie durch die Schmierstoffe in den Rollenumlaufeinheiten 28 erhöht. Eine Änderung der Vorspannkraft Fv kann auch ohne Änderung an der Schmierung vorgenommen werden, da die beiden Gleitführungseinheiten 42 unabhängig voneinander einstellbar sind.

Durch die erfindungsgemäße Kombination der Rollenschienen-Führungen 22 und der Gleitführungseinheiten 42 wird damit eine Supportanordnung 10 mit sehr hoher Steifigkeit bei gleichzeitig sehr präziser Führungsgenauigkeit realisiert, die sich darüber hinaus verglichen mit den bekannten Supportanordnungen durch ausgezeichnete Dämpfungseigenschaften auszeichnet. Gleichzeitig wird durch diese Anordnung, insbesondere durch die sehr guten Dämpfungseigenschaften erreicht, dass der Supportschlitten 14 mit annähernd doppelt so hoher Verfahrgeschwindigkeit verstellt werden kann, als bei den bisher bekannten Drückmaschinen. So liegen die Verfahrgeschwindigkeiten von Supportschlitten im Stand der Technik bei etwa 5 bis 7 m/min während bei der erfindungsgemäßen Drückmaschine Verfahrgeschwindigkeiten von bis zu 13 m/min erreicht werden können.

In den Fig. 5 bis 7 ist ein zweites Ausführungsbeispiel einer Supportanordnung 10a gezeigt, die gleichfalls bei der in Fig. 1 gezeigten Anordnung alternativ zum ersten Ausführungsbeispiel eingesetzt werden kann. Die Supportanordnung 10a unterscheidet sich gegenüber der im ersten Ausführungsbeispiel zuvor beschriebenen Supportanordnung 10 lediglich dadurch, dass die in Fig. 5 links dargestellte Gleitführungseinheit 42a in die Rollen-Schienenführung 22a integriert ist. Die in Fig. 5 rechts dargestellte Gleitführungseinheit 42 und die darunter angeordnete Rollen-Schienenführung 22 entsprechen dagegen dem zuvor unter Bezugnahme auf die Fig. 2 bis 4 erläuterten ersten Ausführungsbeispiel, so dass auf eine detaillierte Beschreibung dieser Komponenten nachfolgend verzichtet wird.

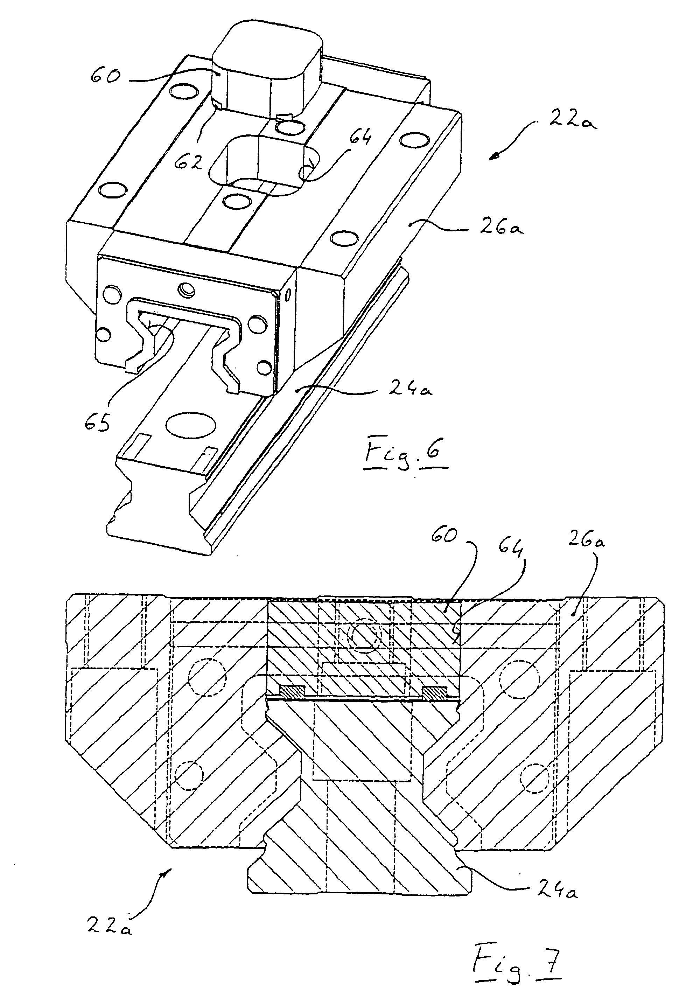

Wie die Fig. 6 und 7 zeigen, besitzt die in Fig. 5 links dargestellte Gleitführungseinheit 42 ein in etwa quaderförmiges Führungselement 60 an dessen Unterseite zwei parallel mit Abstand zueinander angeordnete Gleiteinsätze 42 aufgenommen sind, die parallel zur Längsrichtung der Führungsschiene 24a der Rollen-Schienenführung 22a verlaufen. In der Führungsaufnahme 26a der Rollen-Schienenführung 22a ist eine Aufnahmetasche 64 ausgebildet, die symmetrisch zur Führungsnut 65a der Führungsaufnahme 26a ausgebildet und mittig zwischen den Stirnseiten der Führungsaufnahme 26a angeordnet ist. Die Aufnahmetasche 64a ist dabei so bemessen, dass das Führungselement 60 mit leichter Spielpassung in die Aufnahmetasche 64a eingesetzt werden kann. Im in die Führungsaufnahme 26a eingesetzten Zustand liegt das Führungselement 60 an der als Führungsfläche 66 dienenden Oberseite der Führungsschiene 24a mit seinen Gleiteinsätzen 62a an, wie Fig. 7 zeigt, in der ein Querschnitt durch die Rollen-Schienenführung 22a dargestellt ist.

Damit das Führungselement 60 gleichfalls, wie beim ersten Ausführungsbeispiel, unter Vorspannung an der Führungsschiene 24a und damit am Supportschlitten 14 anliegt, ist das Führungselement 60 gleichfalls vorgespannt befestigt. Zu diesem Zweck ist, wie Fig. 4 zeigt, in das Führungselement 60 ein Haltezapfen 68 eingeschraubt, auf den ein Tellerfederpaket 70 aufgeschoben ist. Der Haltezapfen 68 ragt auch bei diesem Ausführungsbeispiel durch eine Spannschraube 56a, die in einem Durchgangsgewinde 54a am Supportgehäuse 12a eingeschraubt ist. Das Durchgangsgewinde 54a ist dabei so ausgebildet, dass es symmetrisch zur Führungsschiene 26a der Rollen-Schienenführung 22a und symmetrisch zur Führungsaufnahme 26a angeordnet ist.

Darüber hinaus ist bei dem zweiten Ausführungsbeispiel eine Zentralschmierung für die Gleitführungseinheiten 42 und 42a sowie die Rollen-Schienenführungen 22 und 22a vorgesehen, so dass diesen Funktionseinheiten Schmierstoffe zugeführt werden können, die auftretende Schwingungen dämpfen helfen. Ferner kann auch bei dem zweiten Ausführungsbeispiel eine Änderung der Vorspannkraft Fv vorgenommen werden, ohne dass die Schmierung verändert werden muss.

Auch bei diesem zweiten Ausführungsbeispiel wird die Spannschraube 56a mit einem definierten Drehmoment so weit angezogen, dass die gewünschte Vorspannkraft Fv am Supportschlitten 14 wirkt, um die zuvor unter Bezugnahme auf das erste Ausführungsbeispiel erläuterten Wirkungen zu erzielen.

## Patentansprüche

1. Drückmaschine mit:
- einer drehbar antreibaren Spindel,
- mindestens einer Drückrolle (16),
- einem Supportträger (12) und
- einem Supportschlitten (14), insbesondere zur Aufnahme der Drückrolle (16), der an dem Supportträger (12) längsverschieblich gelagert ist,
**dadurch gekennzeichnet,**
**dass** zum längsverschieblichen Lagern des Supportschlittens (14) entlang des Supportträgers (12) sowohl mindestens eine Wälzlager-Schienenführung (22) als auch mindestens eine Gleitführungseinheit (42) vorgesehen sind.

2. Drückmaschine nach Anspruch 1,
**dadurch gekennzeichnet,**
- **dass** zwei Gleitführungseinheiten (42) vorgesehen sind, welche gegeneinander vorgespannt sind, und
- **dass** die gegeneinander vorgespannten Gleitführungseinheiten (42) den Supportschlitten (14) in einer definierten Lage bezüglich der Wälzlager-Schienenführung (22) gleitend führen.

3. Drückmaschine nach Anspruch 1 oder 2,
**dadurch gekennzeichnet,**
- **dass** die Wälzlager-Schienenführung (22) zur Aufnahme einer ersten Kraftkomponente (F1) und einer rechtwinklig zu dieser verlaufenden zweiten Kraftkomponente (F2) ausgelegt ist, welche quer zur Bewegungsrichtung (R) des Supportschlittens (14) gerichtet sind, und
- **dass** die Gleitführungseinheit (42) derart bezüglich der Wälzlager-Schienenführung (22) vorspannbar ist, dass die von der Gleitführungseinheit (42) erzeugte Vorspannkraft (Fv) parallel zu einer der beiden Kraftkomponenten (F1, F2) verläuft.

4. Drückmaschine nach Anspruch 3,
**dadurch gekennzeichnet,**
- **dass** zwei Wälzlager-Schienenführungen (22) vorgesehen und beiderseits des Supportschlittens (14) in einer gemeinsamen Ebene angeordnet sind und
- **dass** die Vorspannkraft (Fv) in einer parallel zur gemeinsamen Ebene der Wälzlager-Schienenführungen (22) verlaufenden Vorspannebene wirkt.

5. Drückmaschine nach einem der Ansprüche 1 bis 4,
**dadurch gekennzeichnet,**
- **dass** zwei Gleitführungseinheiten (42) vorgesehen und beiderseits des Supportschlittens (14) angeordnet sind und
- **dass** zumindest eine der Gleitführungseinheiten (42) unmittelbar zwischen dem Supportschlitten (14) und dem Supportträger (12) angeordnet ist.

6. Drückmaschine nach einem der Ansprüche 1 bis 5,
**dadurch gekennzeichnet,**
**dass** zumindest eine der Gleitführungseinheiten (42) eine in Bewegungsrichtung (R) des Supportschlittens (14) verlaufende Führungsleiste (44) aufweist, mit der die Gleitführungseinheit (42) an dem Supportschlitten (14) oder an dem Supportträger (12) gleitend anliegt.

7. Drückmaschine nach einem der Ansprüche 1 bis 6,
**dadurch gekennzeichnet,**
**dass** zumindest eine der Gleitführungseinheiten (42) zum Erzeugen einer Vorspannkraft (Fv) am Supportschlitten (14) in ihrem Abstand zu dem Schlitten (14) und/oder einer anderen Gleitführungseinheit (42) verstellbar ist.

8. Drückmaschine nach einem der Ansprüche 1 bis 7,
**dadurch gekennzeichnet,**
**dass** die Gleitführungseinheit (42) eine Führungsleiste (44) oder ein Führungselement (60) zum gleitenden Führen des Supportschlittens (14) oder des Supportträgers (12), mindestens ein Befestigungselement (56) zum lösbaren Befestigen der Führungsleiste (44) oder des Führungselementes (60) am Supportträger (12) oder am Supportschlitten (14), sowie mindestens ein zwischen der Führungsleiste (44) oder dem Führungselement (60) und dem Befestigungselement (56) vorgesehenes elastisches Spannelement, insbesondere mindestens eine Tellerfeder (52) aufweist, mit dem sich die Führungsleiste (44) oder das Führungselement (60) am Befestigungselement (52) abstützt.

9. Drückmaschine nach einem der Ansprüche 1 bis 8,
**dadurch gekennzeichnet,**
**dass** die Gleitführungseinheit (42) in der Wälzlager-Schienenführung (22) integriert ist.

10. Drückmaschine nach einem der Ansprüche 1 bis 9, **dadurch gekennzeichnet,**
- **dass** jede Wälzlager-Schienenführung (22) eine Führungsschiene (24) und eine Führungsaufnahme (26) aufweist, welche an der Führungsschiene (24) durch mindestens eine Wälzkörper-Umlaufeinheit (28) verschieblich gelagert ist, und
- **dass** die Gleitführungseinheit (42) in die Führungsaufnahme (26) eingesetzt ist und mit ihrer Gleitfläche (62) an einer der Führungsflächen (66) der Führungsschiene (24) unter Vorspannung gleitend anliegt.

11. Drückmaschine nach einem der vorhergehenden Ansprüche,
**dadurch gekennzeichnet,**
- **dass** der Supportträger als Supportgehäuse (12) ausgeführt ist, in dem der Supportschlitten (14) verschieblich geführt ist,
- **dass** die Gleitführungseinheiten (42) beiderseits des Supportschlittens (14) angeordnet und im Supportgehäuse (12) befestigt sind, und
- **dass** die Gleitführungseinheiten (42) mit ihren Gleitflächen (48, 62) am Supportschlitten (14) unter Vorspannung gleitend anliegen.

12. Drückmaschine nach einem der vorhergehenden Ansprüche,
**dadurch gekennzeichnet,**
- **dass** jede Wälzlager-Schienenführung (22) eine Führungsschiene (24) und eine Führungsaufnahme (26) aufweist, welche an der Führungsschiene (24) durch mindestens eine Wälzkörper-Umlaufeinheit (28) verschieblich gelagert ist, und
- **dass** die Führungsschiene (24) am Supportschlitten (14) und die Führungsaufnahme (26) am Supportträger (12) vorgesehen ist.

13. Drückmaschine nach einem der vorhergehenden Ansprüche,
**dadurch gekennzeichnet,**
**dass** eine gemeinsame Zentralschmierung für die mindestens eine Wälzlager-Schienenführung (22) und die mindestens eine Gleitführungseinheit (42) vorgesehen ist.

14. Drückmaschine nach einem der vorhergehenden Ansprüche,
**dadurch gekennzeichnet,**
**dass** der Supportträger (12) seinerseits an einem quer zum Supportschlitten (14) verfahrbaren Hauptschlitten (18) befestigt ist.

## Claims

1. Spinning machine comprising:
- a rotatably driven spindle,
- at least one spinning roller (16),
- a support carrier (12) and
- a support carriage (14), in particular for receiving the spinning roller (16), which is supported on the support carrier (12) in a longitudinally movable manner,
**characterized in that**
at least one roller bearing rail guide (22) as well as at least one slide guide unit (42) are provided in order to support the support carriage (14) in a longitudinally movable manner along the support carrier (12).

2. Spinning machine according to claim 1,
**characterized in that**
- two slide guide units (42) are provided, which are prestressed with respect to each other, and
- the slide guide units (42) prestressed with respect to each other slidably guide the support carriage (14) in a defined position with respect to the roller bearing rail guide (22).

3. Spinning machine according to claim 1 or 2,
**characterized in that**
- the roller bearing rail guide (22) is designed to receive a first force component (F1) and a second force component (F2) extending perpendicularly to said first force component, which are directed transversely to the direction of movement (R) of the support carriage (14), and
- the slide guide unit (42) can be prestressed with respect to the roller bearing rail guide (22) such that the prestressing force (Fv) generated by the slide guide unit (42) extends parallel to one of the two force components (Fl, F2).

4. Spinning machine according to claim 3,
**characterized in that**
- two roller bearing rail guides (22) are provided and ar ranged on either side of the support carriage (14) in a common plane and
- the prestressing force (Fv) takes effect in a prestressing plane extending parallel to the common plane of the roller bearing rail guides (22).

5. Spinning machine according to any one of claims 1 to 4,
**characterized in that**
- two slide guide units (42) are provided and arranged on either side of the support carriage (14), and
- at least one of the slide guide units (42) is ar ranged directly between the support carriage (14) and the support carrier (12).

6. Spinning machine according to any one of claims 1 to 5,
**characterized in that**
at least one of the slide guide units (42) includes a guide bar (44) extending in the direction of movement (R) of the support carriage (14), by means of which the slide guide unit (42) slidably rests against the support carriage (14) or against the support carrier (12).

7. Spinning machine according to any one of claims 1 to 6,
**characterized in that**
at least one of the slide guide units (42) is adjustable in its distance to the carriage (14) and/or to another slide guide unit (42) in order to generate a prestressing force (Fv) on the support carriage (14).

8. Spinning machine according to any one of claims 1 to 7,
**characterized in that**
the slide guide unit (42) includes a guide bar (44) or a guide member (60) for slidably guiding the support carriage (14) or the support carrier (12), at least one fixing member (56) for detachably fixing the guide bar (44) or the guide member (60) on the support carrier (12) or on the support carriage (14), and at least one flexible tensioning member, in particular at least one cup spring (52), which is provided between the guide bar (44) or the guide member (60) and the fixing member (56) and by means of which the guide bar (44) or the guide member (60) is supported on the fixing member (56).

9. Spinning machine according to any one of claims 1 to 8,
**characterized in that**
the slide guide unit (42) is integrated into the roller bearing rail guide (22).

10. Spinning machine according to any one of claims 1 to 9,
**characterized in that**
- each roller bearing rail guide (22) includes a guide rail (24) and a guide seat (26), which is movably supported on the guide rail (24) by means of at least one roller body rotary unit (28), and
- the slide guide unit (42) is inserted into the guide seat (26) and, whilst being prestressed, slidably rests with its sliding surface (62) against one of the guide surfaces (66) of the guide rail (24).

11. Spinning machine according to any one of the preceding claims,
**characterized in that**
- the support carrier is designed as a support housing (12) in which the support carriage (14) is movably guided,
- the slide guide units (42) are arranged on either side of the support carriage (14) and fixed in the support housing (12), and
- the slide guide units (42), whilst being prestressed, slidably rest with their sliding surfaces (48, 62) against the support carriage (14).

12. Spinning machine according to any one of the preceding claims,
**characterized in that**
- each roller bearing rail guide (22) includes a guide rail (24) and a guide seat (26), which is movably supported on the guide rail (24) by means of at least one roller body rotary unit (28), and
- the guide rail (24) is provided on the support carriage (14) and the guide seat (26) is provided on the support carrier (12).

13. Spinning machine according to any one of the preceding claims,
**characterized in that**
a common centralised lubrication is provided for the at least one roller bearing rail guide (22) and the at least one slide guide unit (42).

14. Spinning machine according to any one of the preceding claims,
**characterized in that**
the support carrier (12) is fixed for its part to a main carriage (18) that is movable transversely to the support carriage (14).

## Revendications

1. Machine de fluotournage avec :
- une broche pouvant être entraînée en rotation,
- au moins un rouleau de fluotournage (16),
- un support (12) et
- un chariot de soutien (14), en particulier pour recevoir le rouleau de fluotournage (16), qui est monté mobile longitudinalement sur le support (12),
***caractérisée en ce que***, pour le montage mobile longitudinalement du chariot de soutien (14) le long du support (12), il est prévu à la fois au moins un guidage (22) par rail à palier à rouleaux et au moins une unité (42) de guidage par contact.

2. Machine de fluotournage selon la revendication 1, ***caractérisée***
- ***en ce que*** deux unités (42) de guidage par contact sont prévues, qui sont précontraintes l'une contre l'autre, et
- ***en ce que*** les unités (42) de guidage par contact précontraintes l'une contre l'autre guident par contact le chariot de soutien (14) dans une position définie par rapport au guidage (22) par rail à palier à rouleaux.

3. Machine de fluotournage selon la revendication 1 ou 2, ***caractérisée***
- ***en ce que*** le guidage (22) par rail à palier à rouleaux est conçu pour supporter une première composante de force (F1) et une deuxième composante de force (F2) perpendiculaire à celle-ci, lesquelles sont orientées transversalement à la direction de déplacement (R) du chariot de soutien (14), et
- ***en ce que*** l'unité (42) de guidage par contact peut être précontrainte de telle manière par rapport au guidage (22) par rail à palier à rouleaux que la force de précontrainte (Fv) produite par l'unité (42) de guidage par contact est parallèle à l'une des deux composantes de force (F1, F2).

4. Machine de fluotournage selon la revendication 3, ***caractérisée***
- ***en ce que*** deux guidages (22) par rail à palier à rouleaux sont prévus et sont placés dans un plan commun des deux côtés du chariot de soutien (14), et
- ***en ce que*** la force de précontrainte (Fv) agit dans un plan de précontrainte parallèle au plan commun des guidages (22) par rail à palier à rouleaux.

5. Machine de fluotournage selon l'une quelconque des revendications 1 à 4, ***caractérisée***
- ***en ce que*** deux unités (42) de guidage par contact sont prévues et sont placées des deux côtés du chariot de soutien (14), et
- ***en ce qu'***au moins l'une des unités (42) de guidage par contact est placée directement entre le chariot de soutien (14) et le support (12).

6. Machine de fluotournage selon l'une quelconque des revendications 1 à 5, ***caractérisée en ce qu'***au moins l'une des unités (42) de guidage par contact présente une barre de guidage (44) s'étendant dans la direction de déplacement (R) du chariot de soutien (14), avec laquelle l'unité (42) de guidage par contact s'appuie de manière coulissante sur le chariot de soutien (14) ou sur le support (12).

7. Machine de fluotournage selon l'une quelconque des revendications 1 à 6, ***caractérisée en ce qu'***au moins l'une des unités (42) de guidage par contact présente une distance réglable par rapport au chariot (14) et/ou à une autre unité (42) de guidage par contact afin de produire une force de précontrainte (Fv) sur le chariot de soutien (14).

8. Machine de fluotournage selon l'une quelconque des revendications 1 à 7, ***caractérisée en ce que*** l'unité (42) de guidage par contact présente une barre de guidage (44) ou un élément de guidage (60) pour guider par contact le chariot de soutien (14) ou le support (12), au moins un élément de fixation (56) pour fixer de façon amovible la barre de guidage (44) ou l'élément de guidage (60) sur le support (12) ou le chariot de soutien (14), ainsi qu'au moins un élément élastique de serrage prévu entre la barre de guidage (44) ou l'élément de guidage (60) et l'élément de fixation (56), en particulier avec une rondelle-ressort (52), élément avec lequel la barre de guidage (44) ou l'élément de guidage (60) s'appuie sur l'élément de fixation (52).

9. Machine de fluotournage selon l'une quelconque des revendications 1 à 8, ***caractérisée en ce que*** l'unité (42) de guidage par contact est intégrée dans le guidage (22) par rail à palier à rouleaux.

10. Machine de fluotournage selon l'une quelconque des revendications 1 à 9, ***caractérisée***
- ***en ce que*** chaque guidage (22) par rail à palier à rouleaux présente un rail de guidage (24) et un logement de guidage (26) qui est monté mobile sur le rail de guidage (24) par au moins une unité (28) de circulation de corps roulants, et
- ***en ce que*** l'unité (42) de guidage par contact est insérée dans le logement de guidage (26) et s'appuie de manière coulissante et sous précontrainte avec sa surface de glissement (62) contre l'une des surfaces de guidage (66) du rail de guidage (24).

11. Machine de fluotournage selon l'une quelconque des revendications précédentes, ***caractérisée***
- ***en ce que*** le support est réalisé en boîtier de soutien (12) dans lequel le chariot de soutien (14) est monté mobile,
- ***en ce que*** les unités (42) de guidage par contact sont placées de chaque côté du chariot de soutien (14) et fixées dans le boîtier de soutien (12), et
- ***en ce que*** les unités (42) de guidage par contact s'appuient de manière coulissante et sous précontrainte avec leurs surfaces de glissement (48, 62) contre le chariot de soutien (14).

12. Machine de fluotournage selon l'une quelconque des revendications précédentes, ***caractérisée***
- ***en ce que*** chaque guidage (22) par rail à palier à rouleaux présente un rail de guidage (24) et un logement de guidage (26) qui est monté mobile sur le rail de guidage (24) par au moins une unité (28) de circulation de corps roulants, et
- ***en ce que*** le rail de guidage (24) est prévu sur le chariot de soutien (14) et le logement de guidage (26) sur le support (12).

13. Machine de fluotournage selon l'une quelconque des revendications précédentes, ***caractérisée en ce qu'***une lubrification centrale commune est prévue pour le guidage (22) par rail à palier à rouleaux au nombre d'au moins un et pour l'unité (42) de guidage par contact au nombre d'au moins une.

14. Machine de fluotournage selon l'une quelconque des revendications précédentes, ***caractérisée en ce que*** le support (12) est fixé quant à lui sur un chariot principal (18) mobile transversalement au chariot de soutien (14).
